**Europäisches Patentamt**

**European Patent Office**

**Office européen des brevets**

(19)

(11) Veröffentlichungsnummer: **0 017 191**

**A1**

(12) # EUROPÄISCHE PATENTANMELDUNG

(21) Anmeldenummer: 80101674.2

(22) Anmeldetag: 28.03.80

(51) Int. Cl.³: **C 02 F 3/12**
C 02 F 3/30

(30) Priorität: 02.04.79 DE 2913132

(43) Veröffentlichungstag der Anmeldung:
15.10.80 Patentblatt · 80/21

(84) Benannte Vertragsstaaten:
AT BE CH FR GB IT SE

(71) Anmelder: Menzel GmbH. + Co.
Hedelfinger Strasse 95
D-7000 Stuttgart 60(DE)

(72) Erfinder: Schneider, Norbert
Holbeinstrasse 13
D-5657 Haan 1(DE)

(72) Erfinder: Zink, Jürgen
Schilfweg 3
D-7000 Stuttgart-Hohenheim(DE)

(72) Erfinder: van der Graaf Jakob H. J. M. Ir. Dipl.-Chem.
Graaf van Burenstraat 26
NL-7411 RW Deventer(NL)

(54) Verfahren zur Durchführung und Regelung von chemischen bzw. biochemischen Prozessabläufen in zwei oder mehreren hintereinandergeschalteten Reaktionsstufen oder Becken.

(57) Bei diesem Verfahren werden für die Begasung der Flüssigkeit einerseits und die Stickstoffelimination andererseits zwei Becken benutzt, die konzentrisch zueinander angeordnet werden.

Durch einen geschlossenen horizontalen Fließvorgang beider Beckeninhalte wird eine unmittelbare Flüssigkeitsrezirkulation zwischen den Becken ermöglicht.

Zulauf- und Rücklaufschlamm werden in das innenliegende Becken eingeleitet und mit dessen Inhalt vermischt. Ein Teil des Gemisches fließt durch eine Verbindung zwischen den Becken in Form einer Durchtrittsöffnung (9) in der Behälterwand des Innenbeckens in das außenliegende Becken, wo es belüftet und nitrifliziert wird. Auch dieser Beckeninhalt befindet sich zwecks Vermeidung von Ablagerungen in einer horizontalen Fließbewegung.

Durch eine weitere Durchtrittsöffnung (5) rezirkuliert ohne zusätzlichen Energieaufwand eine gewisse Flüssigkeitsmenge wieder in das Innenbecken. Aufgrund des Sauerstoffgehaltes in diesem Becken, der zwischen 0 und 0,5 mg/l liegt, findet hier eine gezeilte Stickstoffelimination statt.

<u>Verfahren zur Durchführung und Regelung von chemischen bzw.
bio-chemischen Prozeßabläufen in zwei oder mehreren hintereinandergeschalteten Reaktionsstufen oder Becken.</u>

Gegenstand der Erfindung ist ein Verfahren zur Durchführung
und Regelung von chemischen bzw. bio-chemischen Prozeßabläufen in zwei oder mehreren hintereinandergeschalteten Reaktionsstufen oder Becken und der damit verbundenen Flüssigkeitsbegasung und Flüssigkeitsrezirkulation gemäß dem Oberbegriff
des Patentanspruchs 1.

Ein bereits bekanntes Verfahren dieser Art läßt sich in der
biologischen Abwasserreinigung bei der Stickstoffentfernung
finden. Die Forderung der weitergehenden Abwasserreinigung
ist oft mit einer weitergehenden Elimination der Stickstoffverbindungen verbunden. Dem wird bei dem bekannten Verfahren
dadurch Rechnung getragen, daß zwei Becken hintereinander
angeordnet und geschaltet sind in der Art, daß in das erste
Becken der Zulauf zu dieser Behandlungsstufe und das Rücklaufschlamm-Wasser-Gemisch aus dem nachgeschalteten zweiten
Becken, dem Belebungsbecken, gelangt. Das erste Becken ist
als kleinere Kammer ausgebildet, in der die Flüssigkeit
durch Rühren in Bewegung gehalten wird. Von hier fließt der
Inhalt in das vorzugsweise nachgeschaltete größere Belebungsbecken, wo die Belüftung des Abwassers stattfindet. Die Rezirkulation wird mittels einer Pumpe erzielt, die das Rücklaufschlamm-Wasser-Gemisch aus dem Belebungsbecken in das
erste Becken pumpt.

Dieses Verfahren weist eine ganze Anzahl von Nachteilen auf.
Neben dem verhältnismäßig hohen Bauaufwand, der aus der Bemessung der Bauwerke für einseitigen Wasser- bzw. Erddruck

- 2 -

resultiert, ergeben sich auch hohe Betriebskosten durch das Umwälzaggregat des ersten Beckens und durch den zusätzlichen Pumpvorgang. Gleichzeitig ist die Rezirkulationsrate durch den Pumpvorgang begrenzt.

Der Erfindung liegt die Aufgabe zugrunde, für die Durchführung und Regelung von chemischen bzw. bio-chemischen Prozeßabläufen ein Verfahren für die genannte Flüssigkeitsrezirkulation und Flüssigkeitsbegasung der Reaktionsstufen zu entwickeln, das sich durch erhebliche Einsparungen in den Bau- und Betriebskosten auszeichnet, ohne die Funktionsfähigkeit der Flüssigkeitsrezirkulation zu mindern.

Diese Aufgabe wird erfindungsgemäß dadurch gelöst, daß für die Begasung der Flüssigkeit einerseits und die Stickstoffelimination andererseits Behälterbauwerke benutzt werden, die einen geschlossenen horizontalen Fließvorgang des Inhalts ermöglichen. In Frage kommen dabei Kreis-/Kreisringbecken, Grabensysteme und ähnliches. Erfindungsgemäß werden dabei zwei Becken konzentrisch zueinander angeordnet, wodurch eine unmittelbare Rezirkulation zwischen den beiden Becken dadurch ermöglicht wird, daß eine oder mehrere Verbindungen zwischen den Becken bestehen in Form von Wehren, Klappen, Weichen, Wanddurchbrüchen oder sonstigen Durchtrittsöffnungen, -Vorrichtungen, oder Leitungen, die vorzugsweise auf oder in der Behälterwand des inneren Beckens angebracht sind. Durchtrittsöffnungen werden auch dadurch erreicht, indem mehrere Trennwände zwischen den Reaktionsstufen oder Becken zueinander versetzt angeordnet werden. Beide Becken weisen außerdem eine unabhängig voneinander steuerbare Begasung auf.

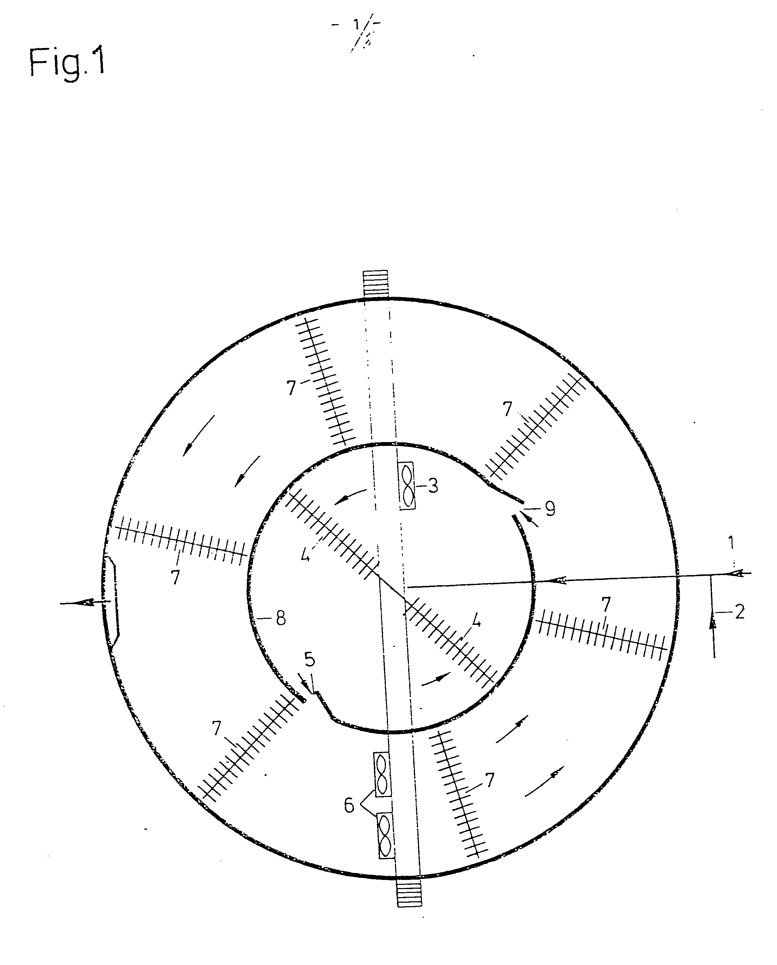

Die Figuren 1 bis 3 zeigen schematisch dargestellte Ausfüh-

- 3 -

rungsbeispiele des Verfahrens.

Figur 1: Eine Kombination mit Kreis-/Kreisringbecken. Zulauf 1 und Rücklaufschlamm-Wasser-Gemisch 2 werden dabei in das erfindungsgemäß konzentrisch angeordnete mittlere Becken geleitet. Im beschriebenen Beispiel sorgt bevorzugt ein Rohrpropeller 3 für eine horizontale Umwälzströmung zwecks Durchmischung des Behälterinhaltes und Vermeidung von Ablagerungen. Wahlweise kann der Inhalt des Beckens durch Belüfter 4 belüftet werden. Durch eine oder mehrere bevorzugt bis zur Beckensohle reichende(n) Durchtrittsöffnung(en) 5 in der Behälterwand des inneren Beckens 8 fließt soviel Flüssigkeit in das äußere Becken, wie es dem Produkt aus horizontaler Fließgeschwindigkeit und Durchtrittsfläche entspricht.

Im äußeren Becken wird die Flüssigkeit ebenfalls bevorzugt durch Rohrpropeller 6 horizontal beschleunigt und in bekannter Weise durch Belüfter 7 belüftet.

Die Rezirkulation in das innere Becken wird erfindungsgemäß dadurch aufrechterhalten, daß die Behälterwand des inneren Beckens 8 auch eine oder mehrere Durchtrittsöffnungen 9 aufweist, die bevorzugt bis zur Beckensohle reichen und durch die die Flüssigkeit vom äußeren Becken in das innere Becken gelangt. Durch Berechnung der Durchtrittsöffnungen 5, 9 läßt sich praktisch jedes beliebige Rezirkulationsverhältnis einstellen. Zusätzliche Energie für die Rezirkulation ist nicht erforderlich, da die Horizontalströmung ohnehin zwecks Vermeidung von Ablagerungen vorhanden ist.

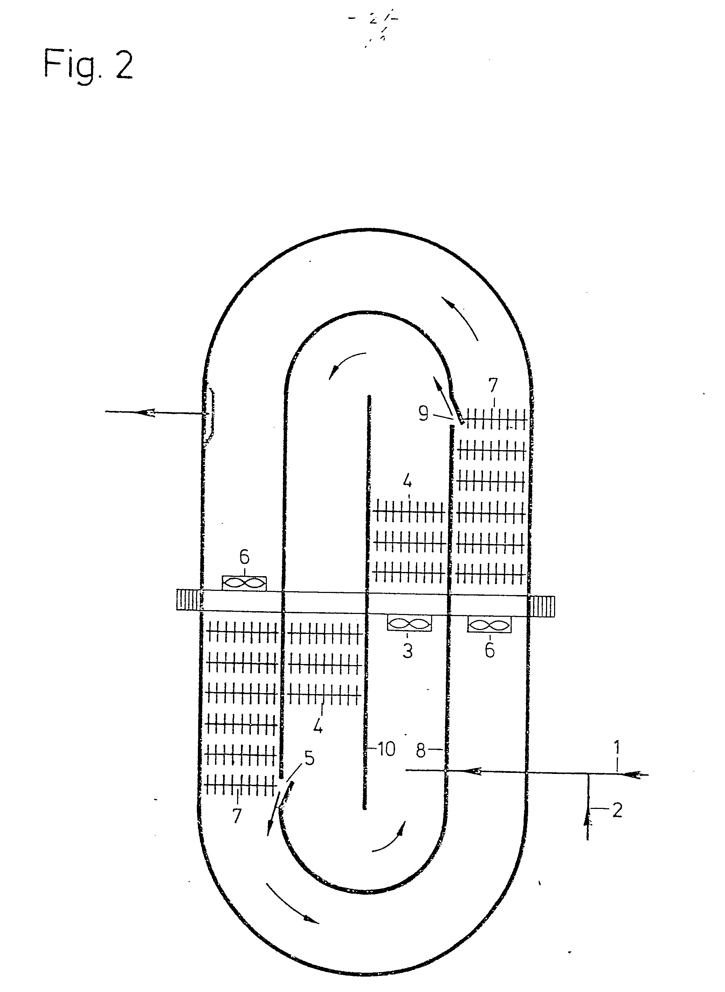

Günstig auf die Baukosten wirkt sich die Tatsache aus, daß die Behälterwand des inneren Beckens 8 (bei Figur 2: 8, 10) nicht für einseitigen Erd- bzw. Wasserdruck ausgelegt werden muß, da die Durchtrittsöffnungen 5, 9 bevorzugt bis zur Beckensohle reichen und einen Wasserspiegelausgleich der zwei Becken ermöglichen.

Das erfindungsgemäße Verfahren für die Begasung und die Flüssigkeitsrezirkulation für zwei oder mehrere hintereinandergeschaltete Reaktionsstufen oder Becken bieten also sowohl bei den Baukosten als auch bei den Energiekosten für die Unterhaltung der Prozesse erhebliche Vorteile gegenüber bisher bekannten Verfahren.

Figur 2: Durchführung des Verfahrens in einem Grabenbecken. Zulauf 1 und Rücklaufschlamm-Wasser-Gemisch 2 werden auch hier in das innenliegende Becken eingeleitet. Ein Rohrpropeller 3 versetzt den Inhalt in eine horizontale Fließströmung und gewährleistet dadurch eine Durchmischung mit gleichzeitiger Vermeidung von Ablagerungen. Gegebenenfalls kann in diesem Becken eine geringe Belüftung durch die Belüfter 4 aufrechterhalten werden.

In der Behälterwand 8 des inneren Beckens befindet sich mindestens eine Durchtrittsöffnung 5, durch die eine regelbare Flüssigkeitsmenge in das äußere Becken fließt.

Im äußeren Becken wird das Belebtschlamm-Wasser-Gemisch ebenfalls bevorzugt durch die Rohrpropeller 6 in eine Horizontalströmung versetzt und durch die Belüfter 7 belüftet. Eine wiederum regelbare Flüssigkeitsmenge fließt nun durch die Durchtrittsöffnung 9 in das innenliegende Becken zurück. Auch bei dieser Beckenausbildung läßt sich durch Berechnung der Durchtrittsöffnungen 5 und 9 praktisch jedes beliebige Rezirkulationsverhältnis einstellen. Zusätzliche Energie für die Rezirkulation ist nicht erforderlich.

- 5 -

Die Durchführung des Verfahrens in einem Grabenbecken bietet sich besonders dort an, wo bestehende Grabenbecken saniert werden müssen. Durch geringe bauliche Veränderungen und durch minimale maschinentechnische Einbauten läßt sich das Verfahren in bestehenden Grabenbecken einsetzen.

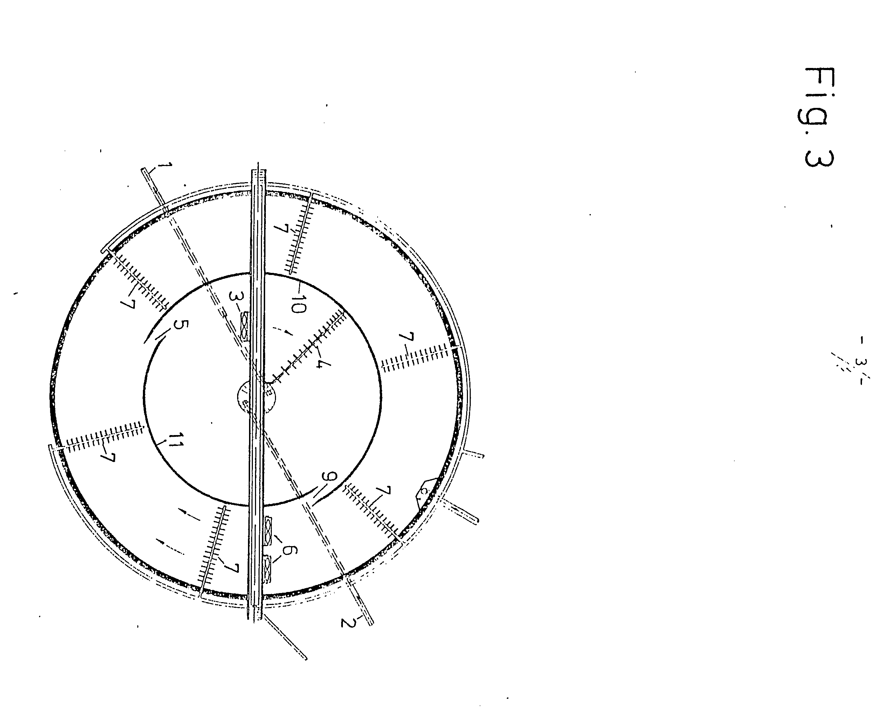

Figur 3: Die Figur 3 zeigt gegenüber der Figur 1 eine Variante der Ausbildung der Durchtrittsöffnungen. Die Öffnungen 5 und 9 werden dadurch erzielt, indem die Trennwände 10 und 11 zueinander versetzt angeordnet werden, d.h., die halbkreisförmige Trennwand 11 weist einen kleineren Radius auf, als die Trennwand 10. Durch diese Ausbildung der Durchtrittsöffnungen entstehen an der Durchtrittsstelle keine Strömungswirbel oder sonstige den horizontalen Fließvorgang ungünstig beeinflussende Widerstände.

Selbstverständlich kann diese Art der Durchtrittsöffnungen auch bei Grabenbecken angeordnet werden, indem man die Beckenwand 8 der Figur 2 in zwei Trennwände aufteilt und diese gemäß Figur 3 in der Art zueinander versetzt anordnet, daß die sich gegenüberliegenden Krümmungen unterschiedliche Radien aufweisen.

- 6 -

Patentansprüche

1. Verfahren zur Durchführung und Regelung von chemischen bzw. bio-chemischen Prozeßabläufen in zwei oder mehreren hintereinandergeschalteten Reaktionsstufen oder Becken, dadurch gekennzeichnet, daß in den hintereinandergeschalteten Reaktionsstufen oder Becken die Flüssigkeitsbegasung steuerbar ist und, daß zwischen den Reaktionsstufen oder Becken eine Flüssigkeitsrezirkulation erzielt wird, indem die Becken vorzugsweise konzentrisch zueinander angeordnet sind, wahlweise beschickt werden können und mindestens eine Verbindung untereinander aufweisen, durch die Flüssigkeit durchtritt, indem die Inhalte der Becken in eine horizontale Umwälzströmung versetzt werden und in diesen Fließvorgang durch Überlaufwehre, Wanddurchbrüche oder sonstige Vorrichtungen eingegriffen wird, um die Flüssigkeitsrezirkulation herbeizuführen.

2. Verfahren nach Anspruch 1, dadurch gekennzeichnet, daß als Verbindung(en) zwischen den Reaktionsstufen oder Becken Durchtrittsöffnungen vorgesehen sind, die durch zueinander versetzt angeordnete Trennwände entstehen.

3. Verfahren nach Anspruch 1 und 2, dadurch gekennzeichnet, daß die Menge der Flüssigkeit, die durch die Verbindung(en) der Becken durchtritt, durch Wehre, Klappen, Weichen oder dergleichen von Hand oder automatisch in Abhängigkeit von einer bzw. mehrerer Meßgrößen regulierbar ist.

4. Verfahren nach den Ansprüchen 1 bis 3, dadurch gekennzeichnet, daß die Horizontalströmung durch Rohrpropeller herbeigeführt wird.

5. Verfahren nach den Ansprüchen 1 bis 4, dadurch gekennzeichnet, daß die Horizontalströmung durch Paddel herbeigeführt wird.

6. Verfahren nach den Ansprüchen 1 bis 5, dadurch gekennzeichnet, daß bei Anwendung der beschriebenen Erfindung in der Abwasserreinigung der Zulauf und das Rücklaufschlamm-Wasser-Gemisch in das innere Becken geleitet wird.

7. Verfahren nach den Ansprüchen 1 bis 6, dadurch gekennzeichnet, daß das innere Becken eine vom äußeren Becken unabhängige Begasung erhält.

8. Verfahren nach den Ansprüchen 1 bis 7, dadurch gekennzeichnet, daß die Begasung des inneren Beckens vollkommen unterbrochen werden kann.

9. Verfahren nach den Ansprüchen 1 bis 8, dadurch gekennzeichnet, daß die Begasung des inneren Beckens intermittierend erfolgt.

10. Verfahren nach den Ansprüchen 1 bis 9, dadurch gekennzeichnet, daß die Begasung für beide Becken regelbar ist und im inneren Becken der Sauerstoffgehalt bevorzugt zwischen 0 und 0,5 mg/l und im äußeren Becken bevorzugt zwischen 0,5 und 3 mg/l gehalten wird.

11. Verfahren nach den Ansprüchen 1 bis 10, dadurch gekennzeichnet, daß der nutzbare Inhalt des inneren Beckens 1/10 bis 1/1 des nutzbaren Inhalts des äußeren Beckens aufweist.

Fig.1

Fig. 2

Fig. 3

0017191

Europäisches Patentamt

Nummer der Anmeldung

EP 80 10 1674

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 2 000 982 (SIMON-HARTLEY) <br> * Seite 1, Zeilen 33-47; Seite 1, Zeilen 73-108; Abbildungen * <br><br> -- | 1,2,6-9 |
| | DE - A - 1 658 112 (PASSAVANT) <br> * Ansprüche 1,5,11,15,16,22,25 * <br><br> -- | 1,3,7, 10 |
| P | DE - A - 2 757 860 (A. SCHREIBER) <br> * Ansprüche 1,2,3,12,15,16,18 * <br><br> -- | 1,7,8, 9,10 |
| A | CH - A - 575 345 (MENZEL) | |
| A | US - A - 3 788 477 (L.S. LOVE) | |
| A | US - A - 3 939 067 (P.H. HUISMAN) | |
| A | DE - A - 2 834 130 (ROMO) | |

KLASSIFIKATION DER ANMELDUNG (Int.Cl. 3)

C 02 F 3/12
        3/30

RECHERCHIERTE SACHGEBIETE (Int. Cl. 3)

C 02 F 3/12
        3/30

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-06-1980 | TEPLY |

EPA form 1503.1  06.78